# EUROPÄISCHE PATENTANMELDUNG

(11) **EP 1 508 949 A1**
(43) Veröffentlichungstag der Anmeldung: **23.02.2005**
(21) Anmeldenummer: 04450163.3
(22) Anmeldetag: 16.08.2004
(51) Int. Cl.: H02B 1/18

(54) **NH-Sicherungs-Einrichtung**

(30) Priorität: 18.08.2003 AT 12942003
(71) Anmelder: M. Schneider, Schaltgerätebau und Elektroinstallationen Gesellschaft m.b.H., 1160 Wien (AT)
(72) Erfinder: Altenhuber, Michael, Dipl.-Ing., 1160 Wien (AT)
(74) Vertreter: Beer, Manfred, Dipl.-Ing.

(57) **Zusammenfassung**

Eine NH-Sicherungs-Lastschaltleiste weist in einen Gehäuse-Unterteil (1) drei Stromleiter (3) zur elektrischen Verbindung mit Sammelschienen (4) auf. Mittels Klemmen (5, 6) werden die Stromleiter (3) mit den Sammelschienen (4) elektrisch leitend verbunden. Da die beiden äußeren Klemmen (6) verstellbar sind, kann der Abstand der Klemmen (5, 6) voneinander in Abhängigkeit des Sammelschienenabstandes eingestellt und an diesen Abstand angepasst werden.

## Beschreibung

Die Erfindung betrifft eine NH-Sicherungs-Einrichtung, mit einem Gehäuse-Unterteil mit wenigstens zwei Stromleitern zur elektrischen Verbindung mit Sammelschienen, wobei sich ein Verbindungsabschnitt der Stromleiter parallel zur Unterseite des Gehäuse-Unterteils erstreckt, und mit Klemmen, um die Stromleiter mit den Sammelschienen zu verbinden.

Derartige NH-Sicherungs-Einrichtungen sind beispielsweise in Form von NH-Sicherungs-Lastschaltleisten oder NH-Sicherungsleisten im Stand der Technik bekannt und weisen einen Gehäuse-Unterteil auf, in dem Kontaktpaare angeordnet sind, die über Sicherungen verbindbar sind, die sich im Deckel der Einrichtung befinden. Die Kontakte führen einerseits über Stromleiter zur Unterseite des Gehäuse-Unterteils, wo sie mit den Sammelschienen verbunden werden, und anderseits zu Anschlüssen an einer Stirnseite des Unterteils, wo Leitungen zu Verteilern oder Verbrauchern angeklemmt werden können.

Bei den Sammelschienen gibt es verschiedene Standardabstände, beispielsweise 60, 100 oder 185 mm, so dass es notwendig ist, verschiedene Baureihen von Gehäuse-Unterteilen herzustellen und vorrätig zu halten, die an diese unterschiedlichen Sammelschienenabstände angepasst sind.

Der Erfindung liegt die Aufgabe zu Grunde eine NH-Sicherungs-Einrichtung und insbesondere einen Gehäuse-Unterteil für eine solche zur Verfügung zu stellen, welche für verschiedene Sammelschienenabstände verwendet werden können.

Gelöst wird diese Aufgabe mit einer NH-Sicherungs-Einrichtung mit den Merkmalen des Anspruches 1.

Bei der Erfindung ist wenigstens eine Klemme längs des Verbindungsabschnittes des Stromleiters verstellbar, so dass der Abstand der Klemmen voneinander in Abhängigkeit des Sammelschienenabstandes einstellbar und so an diesen anpassbar ist.

Da NH-Sicherungs-Einrichtungen in der Regel dreipolig sind, ist eine bevorzugte Ausführungsform der Erfindung dadurch gekennzeichnet, dass am Gehäuse-Unterteil drei Stromleiter angebracht sind, und dass wenigstens zwei Klemmen verstellbar sind.

In der Regel genügt es, wenn eine Klemme fest, d.h. nicht verstellbar ist, und die eine oder die beiden anderen Klemmen verstellbar sind. Bei einer dreipoligen NH-Sicherungs-Einrichtung ist dabei bevorzugt, wenn die beiden äußeren Klemmen verstellbar sind. Da sich bei drei Klemmen unterschiedliche Abstände der Sammelschienen summieren, ist es am einfachsten, wenn die mittlere Klemme eine feste Klemme ist und die beiden äußeren Klemmen verstellbar sind.

Um eine gute Kontaktierung, sowohl des Stromleiters als auch der Sammelschiene zu erreichen, ist eine weiter bevorzugte Ausführungsform der Erfindung dadurch gekennzeichnet, dass der erste Abschnitt eine erste Kontaktfläche für den Stromleiter und der zweite Abschnitt eine zweite Kontaktfläche für die Sammelschiene aufweist und dass die zweite Kontaktfläche etwa um die Stärke der Sammelschiene zur ersten Kontaktfläche parallel verschoben ist.

Der Versatz der beiden Kontaktflächen an der Klemme ist dabei vorzugsweise etwas geringer als die Stärke der Sammelschiene, da auf diese Weise die Sammelschiene zwischen der federnd gespannten Klemme und dem Stromleiter festgeklemmt wird.

Eine gute Führung der verstellbaren Klemme auf dem Stromleiter kann dadurch geschaffen werden, dass am ersten Abschnitt Wangen angeordnet sind, welche sich seitlich neben den Stromleiter erstrecken.

Wenn sich im ersten Abschnitt wenigstens eine Öffnung für den Durchtritt einer Klemmschraube befindet und wenn des weiteren die Öffnung eine Gewindebohrung ist, dann kann die verstellbare Klemme einfach dadurch vormontiert werden, dass eine Klemmschraube durch eine entsprechende Öffnung oder Bohrung in Stromleiter durchgesteckt und in die Klemme eingeschraubt wird. Nach dem Aufschieben auf die Sammelschiene kann die Klemmschraube dann angezogen werden, wodurch die Sammelschiene zwischen der Klemme und dem Stromleiter festgeklemmt wird.

Zwischen den Klemmen und den Stromleitern werden auf einer Seite offene Schlitze geschaffen, die alle nach der gleichen Seite hin offen sein können, so dass der Gehäuse-Unterteil auf den Sammelschienen angesetzt und durch Bewegung in eine Richtung aufgesteckt werden kann, worauf die Schrauben der Klemmen angezogen werden. Dies würde allerdings bei einem größeren Verstellbereich der verstellbaren Klemmen räumliche Probleme schaffen, so dass es bei der Erfindung bevorzugt ist, wenn die zweiten Abschnitte der verstellbaren Klemmen einander zugewandt oder abgewandt sind.

Bei dreipoligen NH-Sicherungs-Einrichtungen besteht dadurch die Möglichkeit, dass die beiden äußeren Klemmen bei dem kleinsten möglichen Sammelschienenabstand auf ihren Stromleitern am weitesten innen und einander zugewandt, und beim größten möglichen Sammelschienenabstand am weitesten außen und voneinander abgewandt angeordnet sind.

Wenngleich es möglich ist, im Stromleiter zwei oder mehr Bohrungen oder Öffnungen vorzusehen, die den standardisierten Sammelschienenabständen entsprechen, ist es im Rahmen der Erfindung bevorzugt, wenn die Öffnung ein Langloch ist.

Diese Ausführungsform hat den Vorteil, dass die verstellbare Klemme einerseits bei der Montage verschiebbar ist, und anderseits eine einfache Anpassungsmöglichkeit der Klemme an den exakten Abstand der Sammelschienen gegeben ist. Auch lässt sich die Montage bei einander zu- oder abgewandten Klemmen einfacher durchführen.

Weitere Merkmale und Vorteile der Erfindung ergeben sich aus der nachfolgenden Beschreibung eines Ausführungsbeispieles der Erfindung unter Bezugnahme auf die Zeichnungen.

Es zeigt:
Fig. 1 den Gehäuse-Unterteil einer erfindungsgemäßen NH-Sicherungs-Einrichtung von der Seite,
Fig. 2 ein Detail von Fig. 1 im Bereich einer Sammelschiene in vergrößertem Maßstab,
Fig. 3 eine erfindungsgemäße Klemme,
Fig. 4 den Gehäuse-Unterteil von unten mit daran befestigten Klemmen
   und
Fig. 5 den Gehäuse-Unterteil, ebenfalls von unten, allerdings mit abgenommenen, verstellbaren Klemmen.

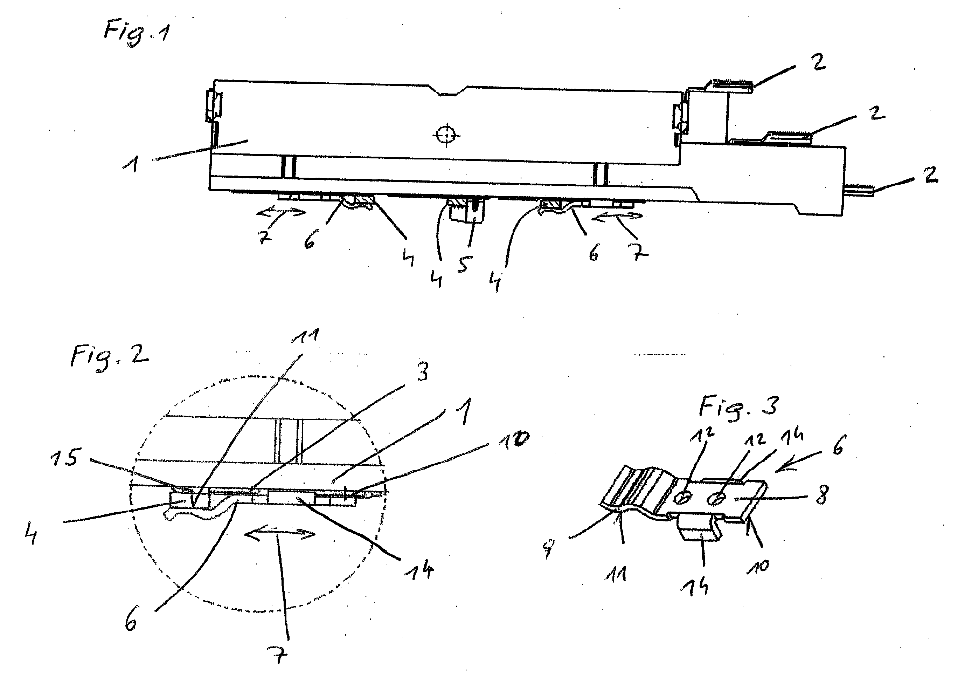

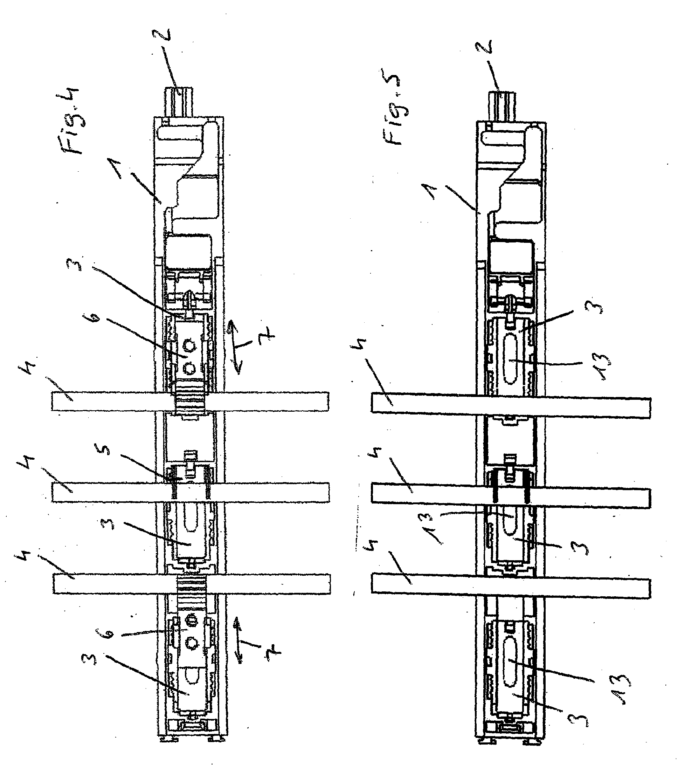

In Fig. 1 ist ein Gehäuse-Unterteil 1 einer NH-Sicherungs-Lastschaltleiste dargestellt. Auf diesem Unterteil 1 kann, wie im Stand der Technik üblich, ein in den Zeichnungen nicht dargestellter, verschwenkbarer Deckel der Lastschaltleiste befestigt sein. Am Gehäuse-Unterteil 1 befinden sich an einem Ende drei Abgangsklemmen 2, an welchen von der Lastschaltleiste wegführende Leitungen angeklemmt werden können. Innerhalb des Gehäuse-Unterteils 1 befinden sich drei Paar nicht dargestellter Kontakte, wobei jeweils ein Kontakt eines Kontaktpaares zu den Abgangsklemmen 2 führt und der andere Kontakt mit Stromleitern 3 verbunden ist, die am besten in Fig. 4 und 5 zu sehen sind, welche die Unterseite des Gehäuse-Unterteils 1 zeigen. Über die Stromleiter 3 bzw. deren sich parallel zur Unterseite des Gehäuse-Unterteils 1 erstreckende Verbindungsabschnitte erfolgt eine Verbindung der Lastschaltleiste mit Sammelschienen 4, die quer zur Längserstreckung der Lastschaltleiste angeordnet sind.

Zur festen elektrischen Kontaktierung der Stromleiter 3 mit den Sammelschienen 4 sind Klemmen vorgesehen, wobei eine Klemme 5 der mittleren Sammelschiene 4 zugeordnet ist und wie im Stand der Technik üblich ausgeführt und starr, d.h. nicht verstellbar ist, wogegen Klemmen 6, für die beiden äußeren Sammelschienen 4 in Richtung der Doppelpfeile 7 verstellbar sind. Da die mittlere Klemme 5 wie im Stand der Technik üblich ausgeführt sein kann, wird sie hier nicht näher beschrieben.

Die erfindungsgemäßen Klemmen 6 weisen demgegenüber einen ersten Abschnitt 8 und einen zweiten Abschnitt 9 auf, wobei der erste Abschnitt 8 mit einer ersten Auflagefläche 10 am Stromleiter 3 und der zweite Abschnitt 9 mit einer zweiten Auflagefläche 11 auf der Sammelschiene 4 anliegt. Wie am besten in Fig. 2 zu sehen ist, ist die Auflagefläche 11 etwa um die Stärke der Sammelschiene 4 gegenüber der Auflagefläche 10 versetzt, wobei das Maß der Versetzung jedoch etwas geringer als die Stärke der Sammelschiene 4 ist. Damit kann die Sammelschiene 4 von der Klemme 6 unter Vorspannung gegen den Stromleiter 3 gedrückt werden, wenn die Klemmschrauben der Klemme 6 angezogen werden und die Sammelschiene 4 über dem Stromleiter 3 liegt.

Es ist jedoch auch möglich, und dies ist in den Fig. 1, 2, 4 und 5 bei den äußeren Klemmen 6 dargestellt, dass die Sammelschienen 4 gar nicht direkt auf den Stromleitern 3 zu liegen kommen, sondern auf einem Gehäuseteil 15 aus Kunststoff neben dem Stromleiter 3, wenn der Sammelschienenabstand so groß oder klein ist, dass er den von den Stromleitern 3 abgedeckten Bereich überschreitet. Durch die Klemmen 6 ist dennoch ein ausreichender Stromfluss von den Sammelschienen 4 zu den Stromleitern 3 gewährleistet.

Für die Klemmschrauben sind im ersten Abschnitt 8 der Klemme 6 zwei Gewindebohrungen 12 angebracht, in welche die Schrauben von der Innenseite des Gehäuses 1 nach außen, d.h. durch den Stromleiter 3 durch, eingeschraubt werden.

Die Stromleiter 3 weisen für den Durchtritt der in den Zeichnungen nicht dargestellten Klemmschrauben Langlöcher 13 auf, die ein Verschieben der Klemmen 6 in Richtung der Längserstreckung der Stromleiter 3 erlauben.

Je nach Sammelschienenabstand, d.h. je nach dem, ob sich die Klemmen 6 ganz am äußeren oder am inneren Ende der Stromleiter 3 befinden, kann entweder die vordere oder die hintere, in der Klemme 6 vorgesehene Gewindebohrung 12 zum Festschrauben der Klemme 6 am Stromleiter 3 verwendet werden. Wenn sich die Klemmen 6 etwa im Mittelbereich des Stromleiters 3 befinden können aus Sicherheitsgründen auch zwei Schrauben verwendet werden.

Durch die zweite Gewindebohrung 12 kann die Leiste auch auf verschieden breiten Sammelschienen 4 befestigt werden. Zusätzlich dient die zweite Gewindebohrung 12 auch dazu, dass die Leiste mit den stirnseitigen Anschlüssen 2 nach oben oder unten montiert werden kann.

Zur sicheren Führung der Klemmen 6 auf den Stromleitern 3 weisen die Klemmen 6 am ersten Abschnitt 8 seitliche Wangen 14 auf, die sich seitlich neben die Stromleiter 3 erstrecken. Diese Wangen 14 haben nicht nur den Vorteil, dass die Klemmen 6 mit Bezug zu den Stromleitern 3 und den Sammelschienen 4 immer exakt positioniert sind, sondern sie dienen auch als Montagehilfe, da die Klemme 6 beim Anziehen der Klemmschrauben nicht von Hand festgehalten werden müssen, da sie sich nicht verdrehen können.

Anstelle der herkömmlichen Klemme 5 für die mittlere Sammelschiene 4 könnte im Rahmen der Erfindung auch eine erfindungsgemäße Klemme 6 verwendet werden. Wie in Fig. 4 und 5 zu sehen ist, ist auch der mittlere Stromleiter 3, wie die beiden äußeren Stromleiter 3 mit einem Langloch 13 ausgeführt. Dies müsste für den Fall, dass als mittlere Klemme 5 eine herkömmliche Klemme verwendet wird, nicht so sein, hat aber den Vorteil, dass bei Bedarf auch eine verstellbare Klemme 6 verwendet werden könnte, und außerdem nur eine einzige Bauart des Stromleiters 3 verwendet wird, was die Herstellungs- und insbesondere Lagerhaltungskosten verringert.

Zusammenfassend kann ein Ausführungsbeispiel der Erfindung wie folgt dargestellt werden:

Eine NH-Sicherungs-Lastschaltleiste weist in ihrem Gehäuse-Unterteil 1 drei Stromleiter 3 zur elektrischen Verbindung mit Sammelschienen 4 auf. Mittels Klemmen 5, 6 werden die Stromleiter 3 mit den Sammelschienen 4 elektrisch leitend verbunden. Da die beiden äußeren Klemmen 6 verstellbar sind, kann der Abstand der Klemmen 5, 6 voneinander in Abhängigkeit des Sammelschienenabstandes eingestellt und an diesen Abstand angepasst werden.

## Patentansprüche

1. NH-Sicherungs-Einrichtung mit einem Gehäuse-Unterteil (1) mit wenigstens zwei Stromleitern (3) zur elektrischen Verbindung mit Sammelschienen (4), wobei sich ein Verbindungsabschnitt der Stromleiter (3) parallel zur Unterseite des Gehäuse-Unterteils (1) erstreckt, und mit Klemmen (5, 6), um die Stromleiter (3) mit den Sammelschienen (4) zu verbinden, **dadurch gekennzeichnet, dass** wenigstens eine Klemme (6) in Richtung der Erstreckung des Verbindungsabschnittes der Stromleiter (3) verstellbar ist.

2. NH-Sicherungs-Einrichtung nach Anspruch 1, **dadurch gekennzeichnet, dass** am Gehäuse-Unterteil (1) drei Stromleiter (3) angebracht sind, und dass wenigstens zwei Klemmen (6) verstellbar sind.

3. NH-Sicherungs-Einrichtung nach Anspruch 2, **dadurch gekennzeichnet, dass** die beiden äußeren Klemmen (6) verstellbar sind.

4. NH-Sicherungs-Einrichtung nach einem der Ansprüche 1 bis 3, **dadurch gekennzeichnet, dass** die verstellbare Klemme (6) einen ersten Abschnitt (8) zur Verbindung mit dem Stromleiter (3) und einen zweiten Abschnitt (9) zur Verbindung mit der Sammelschiene (4) aufweist.

5. NH-Sicherungs-Einrichtung nach einem der Ansprüche 1 bis 3, **dadurch gekennzeichnet, dass** der erste Abschnitt (8) eine erste Kontaktfläche (10) für den Stromleiter (3) und der zweite Abschnitt (9) eine zweite Kontaktfläche (11) für die Sammelschiene (4) aufweist.

6. NH-Sicherungs-Einrichtung nach Anspruch 5, **dadurch gekennzeichnet, dass** die zweite Kontaktfläche (11) etwa um die Stärke der Sammelschiene (4) zur ersten Kontaktfläche (10) parallel verschoben ist.

7. NH-Sicherungs-Einrichtung nach einem der Ansprüche 4 oder 6, **dadurch gekennzeichnet, dass** am ersten Abschnitt (8) Wangen (14) angeordnet sind, welche sich seitlich neben den Stromleiter (3) erstrecken.

8. NH-Sicherungs-Einrichtung nach einem der Ansprüche 4 bis 7, **dadurch gekennzeichnet, dass** sich im ersten Abschnitt (8) wenigstens eine, vorzugsweise zwei, Öffnung (12) für den Durchtritt einer Klemmschraube befindet.

9. NH-Sicherungs-Einrichtung nach Anspruch 8, **dadurch gekennzeichnet, dass** die Öffnung (12) eine Gewindebohrung ist.

10. NH-Sicherungs-Einrichtung nach einem der Ansprüche 1 bis 9, **dadurch gekennzeichnet, dass** sich im Stromleiter (3) wenigstens eine Öffnung (13) für den Durchtritt einer Befestigungsschraube befindet.

11. NH-Sicherungs-Einrichtung nach Anspruch 10, **dadurch gekennzeichnet, dass** die Öffnung (13) ein Langloch ist.

12. NH-Sicherungs-Einrichtung nach Anspruch 3 und 4 sowie gegebenenfalls einem der Ansprüche 5 bis 11, **dadurch gekennzeichnet, dass** die zweiten Abschnitte (9) der verstellbaren Klemmen (6) einander zugewandt sind.

13. NH-Sicherungs-Einrichtung nach einem der Ansprüche 5 bis 12, **dadurch gekennzeichnet, dass** der zweite Abschnitt (9) mit einer Kontaktfläche über den Stromleiter (3) hinausragt.
